Europäisches Patentamt

European Patent Office

Office européen des brevets

(11) Publication number: **0 259 094 B1**

# EUROPEAN PATENT SPECIFICATION

(45) Date of publication of patent specification: **10.06.92** (51) Int. Cl.⁵: **C09J 7/02**

(21) Application number: **87307555.0**

(22) Date of filing: **26.08.87**

(54) **Unified pressure-sensitive adhesive tape.**

(30) Priority: **29.08.86 US 900372**

(43) Date of publication of application:
**09.03.88 Bulletin 88/10**

(45) Publication of the grant of the patent:
**10.06.92 Bulletin 92/24**

(84) Designated Contracting States:
**BE CH DE ES FR GB IT LI NL SE**

(56) References cited:
**WO-A-82/01162**
**WO-A-82/02559**
**US-A- 4 223 067**

(73) Proprietor: **MINNESOTA MINING AND MANU-FACTURING COMPANY**
**3M Center, P.O. Box 33427**
**St. Paul, Minnesota 55133-3427(US)**

(72) Inventor: **Zimmerman, Patrick G. c/o Minnesota Mining and**
**Manufacturing Company 2501 Hudson Road**
**P.O. Box 33427 St. Paul Minnesota 55133(US)**
Inventor: **Johnson, Gordon G. c/o Minnesota Mining and**
**Manufacturing Company 2501 Hudson Road**
**P.O. Box 33427 St. Paul Minnesota 55133(US)**
Inventor: **Korpela, Susan L. c/o Minnesota Mining and**
**Manufacturing Company 2501 Hudson Road**
**P.O. Box 33427 St. Paul Minnesota 55133(US)**
Inventor: **Vernon, Caroline L. c/o Minnesota Mining and**
**Manufacturing Company 2501 Hudson Road**
**P.O. Box 33427 St. Paul Minnesota 55133(US)**

(74) Representative: **Baillie, Iain Cameron et al**
**c/o Ladas & Parry, Altheimer Eck 2**
**W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# EP 0 259 094 B1

**Description**

The invention concerns photopolymerizable pressure-sensitive adhesive tapes comprising a plurality of contiguous layers which cannot be delaminated. Each of the layers comprises a photopolymerized matrix of polymeric chains, and at least one of the outer layers is photopolymerized to a pressure-sensitive adhesive state.

The invention concerns photopolymerizable pressure-sensitive adhesive tapes. U.S. Patent RE No. 24,906 (Ulrich), reissued on December 20, 1960, discloses pressure-sensitive adhesive tapes, the adhesive layers of which comprise copolymers consisting essentially of monomers of acrylic acid esters of non-tertiary alkyl alcohols having from 1-14 carbon atoms, and at least one monomer copolymerizable therewith.

U.S. Patent No. 4,181,752 (Martens et al.) discloses a process for making pressure-sensitive adhesive tape which involves the photopolymerization of the alkyl esters of acrylic acid and the modifying monomers to form the acrylate copolymers. It is also disclosed that the intensity and spectral distribution of the irradiation must be controlled in order to attain desirably high peel resistance and cohesive strength. The process disclosed is preferably carried out in the absence of oxygen and air which inhibit the polymerization reaction. Thus, it is normally carried out in an inert atmosphere such as nitrogen, carbon dioxide, helium, argon, etc. Air can also be excluded by sandwiching the liquid photopolymerizable mixture between layers of solid sheet material and irradiating through the sheet material. Each layer must be coated and cured before the addition of another layer.

One embodiment of a pressure-sensitive adhesive tape is commonly called a "transfer tape" in that it typically has a low-adhesion liner from which it is transferred when used. Such a tape can also be linerless as disclosed in U.S. Patent Nos. 2,889,038 (Kalleberg) and 4,522,870 (Esmay). One embodiment of the invention, like the tape of U.S. Patent No. 4,223,067 (Levens), has a foam-like appearance and character, even though it is not a foam.

The double-coated pressure-sensitive adhesive tape of U.S. Patent No. 2,889,038, (Kalleberg) comprises a flexible support having on opposite faces chemically different pressure-sensitive adhesive layers which are physically incompatible, thus enabling the tape to be wound directly upon itself into a roll for storage and shipment. The tape is made by successively coating and drying solutions of two different pressure-sensitive adhesives onto opposite faces of a flexible web. To test for the incompatibility of the two pressure-sensitive adhesives, a solution of one of the pressure-sensitive adhesives is coated onto an undried coating of the other, and the coatings are simultaneously dried at room temperature for 24 hours to evaporate the solvents. Physical incompatibility is demonstrated by peeling the dried layers apart.

The double-coated pressure-sensitive adhesive tape of the above-cited Esmay patent is similar to that of the Kalleberg patent except that both adhesive faces can have truly high performance, and the adhesive layers at the two faces of the flexible web do not need to be either chemically different or physically incompatible. This is achieved when the pressure-sensitive adhesive at each of the faces is a polymer of predominantly alkyl acrylate, substantially solvent-free, and crosslinked. The Esmay patent states: "It is surmised that if the adhesive were not substantially solvent-free, the solvent would allow the polymer chains to knit across adjacent convolutions during prolonged storage in roll form, such that perfect separation could no longer be assured. In the present state of the art, it would not be commercially feasible to coat a pressure-sensitive adhesive from solution and obtain a pressure-sensitive adhesive layer which is substantially solvent-free. To keep the amount of solvent to a minimum, the (Esmay) tape is preferably made using photopolymerization as in U.S. Patent No. 4,181,752 (Martens et al.)" (col. 2, lines 21-32).

The Esmay patent discloses that a "technique for enchancing immediate adhesion to relatively rough or uneven surfaces is to incorporate glass microbubbles into the pressure-sensitive adhesive as taught in U.S. Patent No. 4,223,067 (Levens)" (col. 4, lines 31,35). Because the microbubbles-containing tape of the Levens patent has a foam-like appearance and character, it is sometimes called a "foam-like" tape even though its pressure-sensitive adhesive layer is substantially free of voids except for the hollow spaces within the microbubbles. The Levens patent in turn teaches that where it is desired to adhere the foam-like tape "to a surface to which its pressure-sensitive adhesive layer would not form a strong bond, it may be desirable to apply to one or both of its faces of its microbubble-filled adhesive layer a layer of unfilled pressure-sensitive adhesive which is especially selected for adhesion to that surface" (col. 4, lines 9-15). Such microbubble-free surface layers can also provide substantially increased cohesive strength, especially at high temperatures. Multiple microbubble-free surface layers can have different adhesive properties, each selected for good adhesion to a certain surface. Because the application of those added layers substantially increase the cost of the foam-like tape, less expensive foam-backed tapes have dominated the market for uses requiring immediate adhesion to rough or uneven surfaces.

The microbubbles can be glass as in the examples of the Levens patent, or they can be polymeric as

2

described in U.S. Patent No. 3,615,472 (Morehouse et al.) or U.S. Patent No. 4,287,308 (Nakayama et al.).

Summary of the Invention

A pressure-sensitive adhesive tape comprising a plurality of superimposed simultaneously photopolymerized layers, at least one outer layer being an acrylic pressure-sensitive adhesive layer, said layer comprising at least one alkyl acrylate ester monomer, contiguous layers defining an interface therebetween, each of said layers comprising a photopolymerized matrix of acrylic polymeric chains, and a photoinitiator, said polymeric chains extending from the matrix of one of said layers through said interface into the matrix of a contiguous layer; said polymeric chains comprising photopolymerized monomers having migrated from the matrix of each contiguous layer, prior to polymerization, whereby said layers cannot be delaminated.

The novel product differs from other tapes of the prior art in that the monomers of the pressure-sensitive adhesive matrix migrate across the interface prior to polymerization so that after polymerization the interface comprises a substantial amount of monomers from both sides of the interface. This yields layers which cannot be physically delaminated.

The present invention embraces a variety of embodiments. One group of preferred embodiments of the present invention is that of pressure-sensitive adhesive tapes which are at least equal in performance to multi-layer foam-like tapes of the Levens patent, but can be produced at significantly lower cost. A second group of preferred embodiments is that of cost-effective, double-coated, pressure-sensitive adhesive tapes. Such tapes may have identical or differing adhesives at each surface. Such tapes may further comprise one or more non-adhesive layers selected from a multitude of polymeric matrices, i.e., flexible or foam-like supports between the adhesive layers, or releasable liners.

As used herein, the term "tape" includes but is not limited to, those adhesive strips which are single-coated adhesive layers permanently attached to a backing or support, double-coated adhesive strips having flexible supports with an adhesive layer on both sides thereof, and adhesive strips with no support or backing, such being typically though not necessarily releasably attached to a low-adhesion liner, and commonly called "transfer tapes".

The present invention also relates to a process for making a pressure-sensitive adhesive tape comprising the steps of:

1) preparing a plurality of coatable compositions, each of said coatable compositions comprising at least one photopolymerizable monomer; at least one of said coatable compositions being curable to a pressure-sensitive adhesive state, monomers of each of said coatable compositions being copolymerizable when blended and subjected to photopolymerization conditions;

2) sequentially coating said coatable compositions to provide a plurality of superimposed layers with contiguous layers defining an interface therebetween, with one composition which is curable to a pressure-sensitive adhesive state being coated as a first or last layer;

3) permitting migration of photopolymerizable monomers through said interface between contiguous layers; and

4) subjecting said superimposed layers to irradiation to simultaneously photopolymerize said monomers in each layer, and to provide polymeric chains comprised of copolymers of photopolymerizable monomers originating from contiguous layers extending through said interface therebetween;

thereby to produce a tape having layers which cannot be delaminated.

All parts, percentages and ratios described herein are by weight unless otherwise identified.

Detailed Description of the Invention

Each of the layers of tapes of the invention comprises a photopolymerizable matrix comprising acrylic polymeric chains. These matrices may comprise a multitude of polymers; however, all polymers used in such matrices must be photopolymerizable, preferably by the ultraviolet portion of the spectrum (220-440nm). At least one layer must be photopolymerizable to a pressure-sensitive adhesive state.

Such pressure-sensitive adhesive layer of the novel tape has a photopolymerizable matrix comprising an acrylic pressure-sensitive adhesive.

The acrylic pressure-sensitive adhesives useful in the present invention are alkyl acrylates, preferably monofunctional unsaturated acrylate esters of non-tertiary alkyl alcohols, the molecules of which have from 1 to about 14 carbon atoms. Included within this class of monomers are, for example, isooctyl acrylate, isononyl acrylate, 2-ethyl-hexyl acrylate, decyl acrylate, dodecyl acrylate, n-butyl acrylate, and hexyl acrylate. Preferred monomers include isooctyl acrylate, isononyl acrylate, and butyl acrylate. The alkyl acrylate monomers can be used to form homopolymers for the photopolymerizable polymer or they can be copolymerized with polar copolymerizable monomers. When copolymerized with strongly polar copolymerizable monomers, the alkyl acrylate monomer generally comprises at least about 75% of the photopolymerizable polymers. When copolymerized with moderately polar copolymerizable monomers, the alkyl acrylate monomer generally comprises at least about 70% of the photopolymerizable polymer.

The polar copolymerizable monomers can be selected from strongly polar copolymerizable monomers such as acrylic acid, itaconic acid, hydroxyalkyl acrylates, cyanoalkyl acrylates, acrylamides or substituted acrylamides, or from moderately polar copolymerizable monomers such as N-vinyl pyrrolidone, acrylonitrile, vinyl chloride or diallyl phthalate. The strongly polar copolymerizable monomer preferably comprises up to about 25%, more preferably up to about 15%.The moderately polar copolymerizable monomer preferably comprises up to about 30%, more preferably from 5% to about 30% of the photopolymerizable polymer.

Where superior cohesive strengths are desired, the pressure-sensitive adhesive matrix of the novel tape should be cross-linked. Preferred crosslinking agents for an acrylic pressure-sensitive adhesive are multiacrylates such as 1,6-hexanediol diacrylate as disclosed in U.S. Patent No. 4,379,201 (Heilman et al.). Crosslinking is especially easy to control when photopolymerizing the monomer in admixture with a multiacrylate crosslinking agent. Other types of crosslinking agents are also useful, e.g., any of those taught in U.S. Patent Nos. 4,330,590 (Vesley), and 4,329,384 (Vesley et al.). Each of the crosslinking agents is useful in the range of from 0.01% to 1% of the total weight of the monomers.

Among pressure-sensitive adhesives which are useful for the pressure-sensitive adhesive layer of the novel tape are those which become tacky only at elevated temperatures, e.g., acrylic copolymers having average carbon-to-carbon chains of less than 4 carbon atoms or those comprising a polymer wherein methacrylic acid esters are substituted for portions of acrylic acid esters.

Tapes of the invention may comprise more than one pressure-sensitive adhesive layer. In such tapes, the pressure-sensitive adhesive layers may comprise similar or different adhesives, in like or unlike thicknesses, having similar or different additives.

Where a foam-like pressure-sensitive adhesive tape is desirable, e.g.,in those applications requiring adhesion to low energy substrates such as polyethylene and polypropylene, and high solids automotive paint systems, a monomer blend comprising microbubbles may be used as a backing or core layer. The microbubbles may be glass as taught in the Levens patent, supra, or they may be polymeric. The microbubbles should have an average diameter of 10 to 200 micrometers, and comprise from 5 to about 65 volume percent of the pressure-sensitive adhesion layer. The thickness of the foam-like layer should be at least six times, preferably at least 20 times that of each microbubble-free layer. The thickness of the layer should exceed three times the average diameter of the microbubbles and twice the diameter of substantially every microbubble. The thickness of foam-like layers in preferred tapes of the invention range from 0.3 mm to 4.0 mm in thickness.

When a microbubble-free pressure-sensitive adhesive tape is desired to be provided on a substantially non-tacky flexible support film, the film layer can comprise substantially the same monomers described for the pressure-sensitive adhesive layer, with different ratios of the acrylic acid ester of non-tertiary alcohol and at least one polar copolymerizable monomer. The preferred range of the polar copolymerizable monomer in such a layer ranges from 20% to 60% of the total monomer mix. Such layer may also comprise a crosslinking agent and other photopolymerizable ingredients including, but not limited to alkyl vinyl ethers, vinylidene chloride, styrene, and vinyl toluene, only in amounts that do not detract from the desired properties.

Other materials which can be blended with the polymerizable monomer mixture include tackifiers, plasticizers, reinforcing agents, dyes, pigments, fibers and fire retardants.

Tapes of the invention may also comprise a woven or nonwoven scrim. Presence of such a scrim will not inhibit migration of the monomers from one layer through an interface to a contiguous layer of the tape.

The present invention also relates to a process for making the pressure-sensitive adhesive tape of the invention, comprising the steps of:

1) preparing a plurality of coatable compositions, each of the coatable compositions comprising at least one photopolymerizable monomer; at least one of the coatable compositions being curable to a pressure-sensitive adhesive state, monomers of each of said coatable compositions being copolymerizable when blended and subjected to photopolymerization conditions;

2) sequentially coating said coatable compositions to provide a plurality of superimposed layers with contiguous layers defining an interface therebetween, with one composition which is curable to a pressure-sensitive adhesive state being coated as a first or last layer;

3) permitting migration of photopolymerizable monomers through said interface between contiguous layers; and

4) subjecting said superimposed layers to irradiation to simultaneously photopolymerize said monomers in each layer, and to provide polymeric chains comprised of copolymers of photopolymerizable monomers originating from contiguous layers extending through said interface therebetween;

thereby to produce a tape having layers which cannot be delaminated.

A single-coated pressure-sensitive tape of the invention may be made by the process above applying the first layer to a low-adhesion carrier, such first layer being photopolymerizable to a pressure-sensitive adhesive state, then applying one or more contiguous layers of a monomer blend which is photopolymerizable to a non-tacky film, and copolymerizable with the first layer. A double-coated tape may be made by following these steps with the application of a second layer which is photopolymerizable to a pressure-sensitive adhesive state. The monomers for the pressure-sensitive adhesive layers may be identical, or may be selected to provide differing specific adhesive properties at each surface of the tape.

A foam-like pressure-sensitive adhesive tape of the invention may be made by a process of the invention comprising the steps of:

1) preparing a coatable composition having ultraviolet-transparent microbubbles dispersed therein which comprises at least one monomer photopolymerizable to a pressure-sensitive adhesive state;

2) preparing one or more coatable compositions which are microbubble-free, and comprises at least one photopolymerizable monomer, said monomer being copolymerizable with the monomer in step 1 when blended and subjected to photopolymerization conditions;

3) sequentially coating said coatable compositions of step 1, and step 2 onto a low-adhesion carrier to form superimposed layers, contiguous layers defining an interface therebetween;

4) permitting migration of photopolymerizable monomers through said interface between said contiguous layers; and

5) subjecting said superimposed layers to irradiation to simultaneously photopolymerize the monomers in each layer, and to provide polymeric chains of copolymers of polymerizable monomers originating from contiguous layers extending through the interface therebetween, thereby to produce a tape having layers which cannot be delaminated. In this process as well as the more general process described above, monomers from each contiguous layer have migrated across the interface, so that after polymerization, a matrix of polymeric chains extends across the interface, substantially comprising monomers from each of the contiguous layers. It is the formation of such polymeric chains that prevents the layers from being delaminated. Generally, in the preferred foam-like pressure-sensitive adhesive tapes of the invention, the layer containing the microbubbles is much thicker than the microbubble-free layer. In an alternate process of making a foam-like tape of the invention, step 3) of the above-outlined process may involve first applying a thin layer of a microbubble-free coatable composition onto the low-adhesion carrier; second, applying a thick coating of the coatable composition containing microbubbles; and third, applying a thin coating of a microbubble-free coatable composition over such layer. After simultaneously irradiating these coatings, the resulting pressure-sensitive adhesive layer has a thick foam-like core and a thin microbubble-free portion at each of its two surfaces. In this tape, as in all double-coated tapes of the invention, compositions comprising different photopolymerizable monomers may be used in the first and third layers where such would be advantageous for the application desired.

The coatable compositions used in tapes of the invention, especially the pressure-sensitive compositions are preferably prepared by premixing together the photopolymerizable monomers and the polar copolymerizable monomer, if used, and photoinitiator. This premix is then partially polymerized to a viscosity in the range of from about 500 cps to about 50,000 cps to achieve a coatable syrup. Alternatively, the monomers can be mixed with a thixotropic agent such as fumed silica to achieve a coatable syrup composition.

Photopolymerization is preferably carried out in an inert atmosphere, such as nitrogen. An inert atmosphere can be achieved by temporarily covering the photopolymerizable coating with a plastic film which is transparent to ultraviolet radiation, and irradiating through the film in air. If the photopolymerizable coating is not covered during photopolymerization, the permissible oxygen content of the inert atmosphere can be increased by mixing the coating with a combustible tin compound as taught in U.S. Patent No. 4,303,485 (Levens), which also teaches such technique for making thick coatings in air.

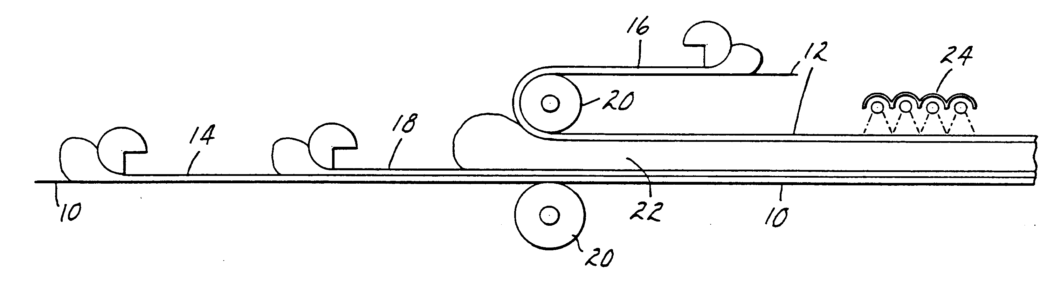

Brief Description of the Drawing

In the drawing, the single figure schematically illustrates the manufacture of a preferred pressure-sensitive adhesive tape of the invention.

As shown in the drawing, onto ultraviolet-transparent, low-adhesion carriers 10 and 12 are respectively knife-coated coatings 14 and 16, each comprising a syrup consisting of a monomer blend which is photopolymerizable to a pressure-sensitive adhesive state. Over the photopolymerizable coating 14 is knife-coated a very thin coating 18 of monomer which is copolymerizable with monomer of the coating 14 and can act as a barrier to migration of monomer into the coating 14 from the next coating 22 which is thickly applied at the nip of a pair of rollers 20. The coating 22 is a mixture of ultraviolet-transparent microbubbles dispersed in monomer which is both photopolymerizable to a pressure-sensitive adhesive state and copolymerizable with monomers of each of the coatings 14, 16 and 18. Emerging from the rollers 20 are the two low-adhesion carriers 10 and 12, between which are the four coatings 14, 16, 18 and 22 which are simultaneously subjected to ultraviolet radiation from a bank of lamps 24, thus photopolymerizing the monomers to provide a layer of pressure-sensitive adhesive which comprises a matrix of polymeric chains that extends across the interfaces between a thick microbubble-filled core and the two microbubble-free surface portions resulting from the polymerization of the coatings 14 and 16.

The carrier 10, instead of being low-adhesion, can have an adhesion-promoting treatment, if necessary, in order to create a permanent bond between the pressure-sensitive adhesive layer and the carrier. A permanently bonded carrier can be selected to provide a tape affording good abrasion resistance and/or corrosion resistance and/or environmental protection. A permanently bonded carrier can be a hot-melt adhesive by which the pressure-sensitive adhesive layer can be bonded to a substrate such as gasketing rubber. For any of these uses, the tape may or may not include the thick coating 22.

T-PEEL

T-Peel is measured as in ASTM D-1876-72 except that the test tapes were 0.5-inch (1.27 cm) in width and were tested after being adhered to aluminum foil backings for two hours. Results are reported in Newtons per decimeter (N/dm). Only cohesive failures are reported.

T-Peel provides a quantitative value of cohesive strength and is less sensitive to differences in the adhesion of the pressure-sensitive adhesive to the test surface.

180° Peel Adhesion

The adhesive layer to be tested is transferred to 0.05-mm thick, chemically primed, biaxially oriented poly(ethylene terephthalate) film which then is slit to a width of 1/2 inch (1.27 cm). The resulting tape is self-adhered to plate glass under the weight of a 2.04-kg hard-rubber-covered steel roller, 2 passes in each direction. After dwelling at 23°C for about 5 minutes, "180° Peel Adhesion" is measured by moving the free end of the tape away from the glass parallel to the surface of the glass at a rate of about 0.5 cm per second (using a tensile tester).

90° Peel Adhesion

The adhesive layer to be tested is transferred to 0.05-mm thick, chemically primed, biaxially oriented poly(ethylene terephthalate) film which then is slit to a width of 1/2 inch (1.27 cm). The resulting tape is self-adhered to a smooth stainless steel plate under the weight of a 2.04-kg hard-rubber-covered steel roller, 2 passes in each direction. After exposure to the indicated conditions, "90° Peel Adhesion" is measured by moving the free end of the tape away from the steel plate at 90° and at a rate of about 0.5 cm per second (using a tensile tester).

Holding Power

This test employs two 25.4-mm wide stainless steel straps as follows: Type 304-2BA, 0.38 mm in thickness, surface roughness 0.05 micrometer arithmetic average deviation from the main line. The strips are washed with heptane (also with MEK if heavy oils are present). A strip of 25.4-mm wide double-coated pressure-sensitive adhesive tape, carried on a low-adhesion liner, is adhered to one end of one of the straps and trimmed to a length of 25.4-mm. The liner is then removed, and the other strap adhered to the exposed adhesive surface. The specimen is placed in a horizontal position and rolled down with a 6.8-kg (15-lb.) roller to ensure intimate contact between the surfaces. After dwelling at room temperature for 24 hours, the assembly is hung in a 121°C oven from one strap with a weight attached to the other strap, and the time at which the weight falls is recorded. The time of failure is indicative of the "Holding Power" of the double-coated pressure-sensitive adhesive tape. If no failure occurs, the test is discontinued after 24 hours.

Static Shear Test

An assembly is prepared as in the test for Holding Power except that instead of using a roller, a 1-kg weight rests on the assembly for 15 minutes at room temperature. Then the panel with the adhered tape is placed in an air-circulating oven which has been preheated to the indicated temperature, and after 15 minutes, a weight is hung from the free end of the tape, with the top strap vertical. The time at which the weight falls is the "Static Shear Value". If no failure, the test is discontinued at 10,000 minutes (in the 70°C test) or sometimes at 1440 minutes (in the 121°C test). Only cohesive failures are reported.

Delamination Test

A specimen of the tape is immersed in a bath of ethyl acetate at ordinary room temperature, then visually examined periodically. Any visual evidence of delamination is reported as a failure. The test is discontinued if there has been no failure after 24 hours.

In the following examples, parts are given by weight. The glass microbubbles used in the examples had a density of 0.15 g/cm$^3$ and were 20-150 micrometers in diameter (average 55 micrometers).

Example 1

A syrup was prepared from 87.5 parts of isooctyl acrylate and 12.5 parts of acrylic acid with 0.04 phr "Irgacure" 651, infra, which had been partially polymerized by ultraviolet radiation to a viscosity of 3600 cps (Brookfield), an inherent viscosity of the polymer being 2.84 and a degree of polymerization of 8%. After adding 0.1 phr (phr - parts per hundred syrup) of 2,2-dimethoxy-2-phenyl acetophenone photoinitiator ("Irgacure" 651), 0.056 phr of hexanediol diacrylate crosslinking agent, and 8 phr of glass microbubbles, the mixture was thoroughly mixed with a propeller mixer at 500 rpm for ten minutes and then carefully degassed in a desiccator using a vacuum pump.

A microbubble-free monomer blend of 90 parts isooctyl acrylate and 10 parts acrylic acid (and 0.04 phr "Irgacure" 651) was partially polymerized by ultraviolet radiation to a degree of polymerization of about 6-10%, followed by the addition of the same photoinitiator and a crosslinking agent, mixing, and degassing. The crosslinking agent used in the microbubble free monomer blend was Photoactive Triazine B of U.S. Patent No. 4,391,687 (Vesley), and its amount was 0.15 phr.

Pressure-sensitive adhesive tapes were prepared as illustrated in the drawing except omitting the coating 18. Used for the low-adhesion carriers 10 and 12 were a pair of transparent, biaxially oriented poly-(ethylene terephthalate) films, the facing surfaces of which had low-adhesion silicone coatings. The thicknesses of the coatings were:

coatings 14 and 16 (microbubble-free blend) 0.05 mm

coatings 22 (microbubble-filled mixture) 1.0 mm

The composite emerging from the roller 20 was irradiated with an exposure of 410 mJ/cm$^2$ (Dynachem Radiometer Model 500) from a bank of lamps, 90% of the emissions of which were between 300 and 400 nm with a maximum at 351 nm. The composite was cooled by blowing air against both films during the irradiation to keep the temperature of the films below 85°C to avoid wrinkling of the films.

Comparative Example 1

A double-coated, foam-like pressure-sensitive adhesive tape was made like that of Example 1 except as follows:

(1) the microbubble-filled mixture was coated and polymerized by itself;

(2) the microbubble-free monomer blend was coated onto a low-adhesion carrier and photopolymerized to provide a transfer tape; and

(3) a length of the transfer tape was hot-laminated onto the microbubble-filled layer.

The hot lamination was carried out between two rollers, one steel internally heated to 150°C and the other covered with silicone rubber. The rollers were spaced 0.5 mm apart and were driven at 30 cm/min. The silicone rubber covering had been selected to apply maximum pressure with substantially no microbubble breakage.

The crosslinked double-coated pressure-sensitive adhesive tapes of Example 1 and Comparative Example 1 were tested as reported in Table I.

### Table I

| Examples: | 1 | Comp. 1 |
|---|---|---|
| 90° Peel Adhesion (N/dm) | | |
| RT for 20 min. | 103 | 44 |
| RT for 72 hr. | 226 | 42 |
| 38°C 100% RH for 72 hr. | 174 | 57 |
| Holding Power (minutes) | | |
| 1-kg weight | 1440 | 57 |
| Static Shear Test (minutes) | | |
| 500 g weight/70°C | 3000 | 154 |
| 250 g weight/121°C | 1440 | <1440 |
| Delamination Test (minutes) | Passed | 30 |

### Example 2

A double-coated pressure-sensitive adhesive tape was made as in Example 1 except as follows. There was only one microbubble-free coating, and it was partially polymerized 70/30 isooctyl acrylate/N-vinyl-2-pyrrolidone. A 0.025 mm coating (coating 18 of the Drawing) of partially polymerized isooctyl acrylate was interposed between that coating and the core.

### Example 3

A double-coated pressure-sensitive adhesive tape was made as in Example 2 except omitting the coating 18 of partially polymerized isooctyl acrylate. Test results for tapes of Examples 2 and 3 are reported in Table II.

### Table II

| Examples: | 2 | 3 |
|---|---|---|
| 90° Peel Adhesion (N/dm) | | |
| RT for 20 min. | 43 | 22 |
| RT for 24 hours | 153 | 91 |
| RT for 72 hours | 131 | 66 |

### Example 4 and Comparative Example 4

Double-coated, pressure-sensitive adhesive tapes were made as in Example 1 and Comparative Example 1 except as follows: Each microbubble-filled mixture was frothed as in the "Typically Tape-making Procedure" of U.S. Patent No. 4,415,615, and there was only one coating of the microbubble-free monomer blend. Test results are reported in Table III.

8

Table III

| Examples: | 4 | Comp. 4 |
|---|---|---|
| 90° Peel Adhesion (N/dm) | | |
|    RT for 20 min. | 83 | 82 |
|    RT for 72 hr. | 136 | 146 |
| Static Shear Test (minutes) | | |
|    500 g weight/70°C | >10,000 | 4747 |
|    250 g weight/121°C | 6,000 | 4200 |
| Delamination Test (minutes) | Passed | 30 |

Examples 5-7

Three pressure-sensitive adhesive tapes (transfer tapes) were prepared from two unfilled, partially polymerized monomer blends using the following monomers:

   isooctyl acrylate      IOA
   butyl acrylate        BA
   acrylic acid         AA
   N-vinyl-2-pyrrolidone   NVP

Each of the monomer blends was partially polymerized in the same way as was the microbubble-free blend of Example 1 except that the crosslinking agent of the IOA/AA/BA coating of Example 5 was 0.1 phr hexanediol diacrylate. As in Example 1, each of the coatings was 0.05 mm in thickness. In each case, the two blends were coated sequentially onto biaxially oriented poly(ethylene terephthalate) film and irradiated as in Example 1 except in a nitrogen atmosphere and at an exposure of 220 mj/cm$^2$. Upon thus being photopolymerized, polymeric chains were formed which extended across the interface between the two coatings of each of the tapes.

The tapes of Examples 5-7 were tested for 180° Peel Adhesion with results as indicated in Table IV.

Table IV

| Example | Monomers for each coating | 180° Peel Adhesion (N/dm) |
|---|---|---|
| 5 | 98/2   IOA/AA | 16 |
| | 70/15/15   IOA/AA/BA | 24 |
| 6 | 70/30   IOA/NVP | 50 |
| | 90/10   IOA/AA | 37 |
| 7 | 100   IOA | 8 |
| | 80/20   IOA/AA | 24 |

Each of the tapes of Examples 5-7 was subjected to the Delamination Test, and none of them failed.

Each of of these tapes can be applied to a backing which provides good abrasion resistance, corrosion resistance, or environmental protection. In doing so, the face of the pressure-sensitive adhesive layer of the tape that better adheres to that backing would be applied to the backing. To reduce production costs, the pressure-sensitive adhesive layer of each of those tapes could be formed directly upon the backing instead of using the poly(ethylene terephthalate) film.

Example 8 and Comparative Example 8

Two pressure-sensitive adhesive tapes were made as in Example 1 and Comparative Example 1, except as follows:

Both monomer mixtures were microbubble-free, 0.06 phr of a multifunctional acrylate crosslinking agent, ethoxylated trimethylolpropane diacrylate was used, along with 37.5 phr Chemlink 2000™, a long chain activated diol oligomer.

The tapes of Example 8 and Comparative Example 8 were tested for delamination. The tape of the invention, Example 8, passed. The tape of the prior art, Comparative Example 8, failed at 10 minutes.

**Claims**

1. A pressure-sensitive adhesive tape comprising a plurality of superimposed simultaneously photopolymerized layers, at least one outer layer being an acrylic pressure-sensitive adhesive layer, said layer comprising at least one alkyl acrylate ester monomer, contiguous layers defining an interface therebetween, each of said layers comprising a photopolymerized matrix of acrylic polymeric chains, and a photoinitiator, said polymeric chains extending from the matrix of one of said layers through said interface into the matrix of a contiguous layer; said polymeric chains comprising photopolymerized monomers having migrated from the matrix of each contiguous layer, prior to polymerization whereby said layers cannot be delaminated.

2. A pressure-sensitive adhesive tape according to claim 1 wherein the pressure-sensitive adhesive layer comprises an acrylic acid ester of non-tertiary alkyl alcohol, the molecules of which have from 1 to 14 carbon atoms.

3. A pressure-sensitive adhesive tape according to claim 2 wherein the pressure-sensitive adhesive layer further comprises at least one polar copolymerizable monomer.

4. A pressure-sensitive adhesive tape according to claim 3 wherein said adhesive copolymer comprises
   (a) from 40% to 80% isooctyl acrylate; and
   (b) from 20% to 60% of a polar copolymerizable monomer selected from the group consisting of N-vinyl pyrrolidone and acrylic acid.

5. A pressure-sensitive adhesive tape according to claim 1 wherein said superimposed layers include an outer pressure-sensitive adhesive layer and at least one layer of substantially non-tacky polymeric material.

6. A pressure-sensitive adhesive tape according to claim 5 wherein said substantially non-tacky polymeric material comprises photopolymerized polymeric matrix selected from the group consisting of polymers of multifunctional acrylates and copolymers of monomers comprising acrylic acid esters of non-tertiary alkyl alcohol having from 1 to 14 carbon atoms and at least one polar copolymerizable monomer.

7. A pressure-sensitive adhesive tape according to claim 6 wherein said substantially non-tacky polymeric material comprises at least one copolymer of monomers comprising
   (a) from 40% to 80% of acrylic acid ester of non-tertiary alcohol, the molecules of which have from 1 to 14 carbon atoms; and
   (b) from 20% to 60% of at least one polar copolymerizable monomer.

8. A pressure-sensitive adhesive tape according to claim 1 wherein at least one of said layers further comprise from 5% to 65% volume percent microbubbles having a specific gravity of no more than 1.0.

9. A pressure-sensitive adhesive tape according to claim 1 wherein each outer layer is a pressure-sensitive adhesive layer.

10. A pressure-sensitive adhesive tape according to claim 9 having outer layers comprised of photopolymerized polymeric pressure-sensitive adhesive and at least one intermediate layer photopolymerized non-tacky polymeric material, wherein each of said layers comprises a copolymer of monomers comprising:
   (a) a major proportion of an acrylic acid ester of non-tertiary alkyl alcohol, the molecules of which have from 1 to 14 carbon atoms; and
   (b) a minor proportion of a polar copolymerizable monomer selected from the group consisting of N-vinyl pyrrolidone and acrylic acid.

11. A pressure-sensitive adhesive tape according to claim 9 wherein each of said pressure-sensitive adhesive outer layers comprises a copolymer having at least one photopolymerizable monomer not present in the other pressure-sensitive adhesive outer layer.

12. A pressure-sensitive adhesive tape according to claim 10 wherein the polar copolymerizable monomer (b) in one of said pressure-sensitive adhesive layers is acrylic acid, and the polar copolymerizable monomer (b) in the other of said pressure-sensitive adhesive layer is N-vinyl pyrrolidone.

13. A pressure-sensitive adhesive tape according to claim 10 wherein said layer photopolymerized to a non-tacky polymeric material further comprises from 5% by volume to 65% by volume microbubbles having a specific gravity of 1.0 or less.

14. A process for making the pressure-sensitive adhesive tape of claim 1, said process comprising the steps of:
1) preparing a plurality of coatable compositions, each of said coatable compositions comprising at least one photopolymerizable monomer; at least one of said coatable compositions being curable to a pressure-sensitive adhesive state, monomers of each of said coatable compositions being copolymerizable when blended and subjected to photopolymerization conditions;
2) sequentially coating said coatable compositions to provide a plurality of superimposed layers with contiguous layers defining an interface therebetween, with at least one of said compositions being curable to a pressure-sensitive adhesive state being coated as a first or last layer;
3) permitting migration of photopolymerizable monomers through said interface between contiguous layers; and
4) subjecting said superimposed layers to irradiation to simultaneously photopolymerize said monomers in each layer, and to provide polymeric chains comprised of copolymers of photopolymerizable monomers originating from contiguous layers extending through said interface therebetween;
thereby to produce a tape having layers which cannot be delaminated.

15. A process for making the tape of claim 4, said process comprising the steps of:
1) preparing one or more coatable compositions which are photopolymerizable to yield a non-tacky polymeric material;
2) preparing a coatable composition containing at least one monomer which is photopolymerizable to a pressure-sensitive adhesive state, said monomer being copolymerizable with the monomer in step 1 when blended and subjected to photopolymerization conditions;
3) sequentially coating said coatable compositions of step 1, and step 2 onto a carrier web to form superimposed layers, contiguous layers defining an interface therebetween;
4) permitting migration of photopolymerizable monomers through said interface between said contiguous layers; and
5) subjecting said superimposed layers to irradiation to simultaneously photopolymerize said monomers in each layer, and to provide polymeric chains comprised of copolymers of photopolymerizable monomers originating from contiguous layers extending through said interface therebetween;
thereby to produce a tape having layers which cannot be delaminated.

16. A process for making the pressure-sensitive tape of claim 8, said process comprising the steps of:
1) preparing a coatable composition having ultraviolet-transparent microbubbles dispersed therein which comprises at least one monomer photopolymerizable to a pressure-sensitive adhesive state;
2) preparing one or more coatable compositions which are microbubble-free, and comprises at least one photopolymerizable monomer, said monomer being copolymerizable with the monomer in step 1 when blended and subjected to photopolymerization conditions;
3) sequentially coating said coatable compositions of step 1, and step 2 onto a low-adhesion carrier to form superimposed layers, said contiguous layers defining an interface therebetween;
4) permitting migration of photopolymerizable monomers through said interface between said contiguous layers; and
5) subjecting said superimposed layers to irradiation to simultaneously photopolymerize the mon-

EP 0 259 094 B1

omers in each layer, and to provide polymeric chains of copolymers of polymerizable monomers originating from contiguous layers extending through the interface therebetween;
thereby to produce a tape having layers which cannot be delaminated.

**Revendications**

1. Ruban adhésif autocollant ou sensible à la pression, comprenant plusieurs couches photopolymérisées simultanément, superposées, au moins une couche extérieure étant une couche adhésive sensible à la pression, acrylique, cette couche comprenant au moins un monomère d'ester acrylate d'alkyle, les couches contiguës formant une interface entre elles, chacune de ces couches comprenant une matrice photopolymérisée de chaînes polymères acryliques et un photo-initiateur, ces chaînes polymères s'étendant depuis la matrice de l'une des couches susdites à travers l'interface précitée vers et dans la matrice d'une couche contiguë, ces chaînes polymères comprenant des monomères photopolymérisés ayant émigré depuis la matrice de chaque couche contriguë, avant la polymérisation, de sorte que ces couches ne peuvent pas être déstratifiées.

2. Ruban adhésif sensible à la pression suivant la revendication 1, dans lequel la couche adhésive sensible à la pression comprend un ester d'acide acrylique d'un alcool alkylique non tertiaire, dont les molécules comportent de 1 à 14 atomes de carbone.

3. Ruban adhésif sensible à la pression suivant la revendication 2, dans lequel la couche adhésive sensible à la pression comprend en outre au moins un monomère copolymérisable polaire.

4. Ruban adhésif sensible à la pression suivant la revendication 3, dans lequel le copolymère adhésif précité comprend :
   (a) de 40 à 80 % d'acrylate d'isooctyle ;
   (b) de 20 à 60 % d'un monomère copolymérisable polaire choisi dans le groupe comprenant la N-vinylpyrrolidone et l'acide acrylique.

5. Ruban adhésif sensible à la pression suivant la revendication 1, dans lequel les couches superposées susdites comprennent une couche adhésive extérieure, sensible à la pression, et au moins une couche d'une matière polymère essentiellement non collante.

6. Ruban adhésif sensible à la pression suivant la revendication 5, dans lequel la matière polymère sensiblement non collante comprend une matrice polymère photopolymérisée choisie dans le groupe comprenant les polymères d'acrylates multifonctionnels et les copolymères de monomères comprenant des esters d'acide acrylique d'un alcool alkylique non tertiaire comportant de 1 à 14 atomes de carbone, et d'au moins un monomère copolymérisable polaire.

7. Ruban adhésif sensible à la pression suivant la revendication 6, dans lequel la matière polymère essentiellement non collante comprend au moins un copolymère de monomères comportant :
   (a) de 40% à 80% d'ester d'acide acrylique d'alcool non tertiaire, dont les molécules comportent de 1 à 14 atomes de carbone ; et
   (b) de 20 à 60 % d'au moins un monomère copolymérisable polaire.

8. Ruban adhésif sensible à la pression suivant la revendication 1, dans lequel au moins l'une des couches susdites comprend en outre de 5 à 65 % en volume de microbulles présentant un poids spécifique non supérieur à 1,0.

9. Ruban adhésif sensible à la pression suivant la revendication 1, dans lequel chaque couche extérieure est une couche adhésive sensible à la pression.

10. Ruban adhésif sensible à la pression suivant la revendication 9, comportant des couches extérieures constituées d'un adhésif sensible à la pression, polymère, photopolymérisé, et au moins une couche intermédiaire d'une matière polymère non collante, photopolymérisée, dans lequel chacune des couches susdites est constituée par un copolymère de monomères comportant :
   (a) une proportion majeure d'un ester d'acide acrylique d'un alcool alkylique non tertiaire, dont les molécules comportent de 1 à 14 atomes de carbone ; et

(b) une proportion mineure d'un monomère copolymérisable polaire choisi dans le groupe comprenant la N-vinylpyrrolidone et l'acide acrylique.

11. Ruban adhésif sensible à la pression suivant la revendication 9, dans lequel chacune des couches extérieures adhésives, sensibles à la pression, comprend un copolymère comportant au moins un monomère photopolymérisable qui n'est pas présent dans l'autre couche extérieure adhésive sensible à la pression.

12. Ruban adhésif sensible à la pression suivant la revendication 10, dans lequel le monomère copolymérisable polaire (b) dans l'une des couches adhésives sensibles à la pression susdites est constitué par l'acide acrylique, et le monomère copolymérisable polaire (b) de l'autre des couches adhésives sensibles à la pression est constitué par de la N-vinylpyrrolidone.

13. Ruban adhésif sensible à la pression suivant la revendication 10, dans lequel la couche susdite photopolymérisee en une matière polymère non collante comprend en outre 5 à 65 % en volume de microbulles présentant un poids spécifique de 1,0 ou moins.

14. Procédé de fabrication d'un ruban adhésif sensible à la pression suivant la revendication 1, caractérisé en ce qu'il comprend les phases suivantes :
(1) la préparation de plusieurs compositions pouvant être appliquées en couche, chacune de ces compositions comprenant au moins un monomère photopolymérisable, au moins l'une de ces compositions pouvant être appliquées en couche étant durcissable à un état adhésif sensible à la pression, les monomères de chacune de ces compositions applicables en couche étant copolymérisables lorsqu'ils sont mélangés et soumis à des conditions de photopolymérisation ;
(2) l'application séquentielle des compositions susdites applicables en couche pour former plusieurs couches superposées, les couches contiguës formant une interface entre elles, au moins l'une de ces compositions durcissables à un état adhésif sensible à la pression étant appliquée à titre de première ou de dernière couche ;
(3) la migration possible des monomère photopolymérisables à travers l'interface susdite comprise entre des couches contiguës ; et
(4) l'application aux couches superposées susdites, d'une irradiation pour simultanément photopolymériser les monomères susdits de chaque couche, et former des chaînes polymères constituées de copolymères de monomères photopolymérisables provenant de couches contiguës s'étendant à travers l'interface susdite comprise entre elles ;
pour produire de la sorte un ruban comportant des couches qui ne peuvent pas être déstratifiées.

15. Procédé de fabrication du ruban suivant la revendication 4, comprenant les phases suivantes :
(1) la préparation d'une ou de plusieurs compositions applicables en couche, qui sont photopolymérisables pour donner une matière polymère non collante ;
(2) la préparation d'une composition applicable en couche contenant au moins un monomère qui est photopolymérisable à un état adhésif sensible à la pression, ce monomère étant copolymérisable avec le monomère de la phase (1), lorsque ces monomères sont mélangés et soumis à des conditions de photopolymérisation ;
(3) l'application séquentielle des compositions susdites applicables en couche de la phase (1) et de la phase (2) sur une pièce de support pour former des couches superposées, les couches contiguës formant une interface entre elles ;
(4) la migration possible des monomères photopolymérisables à travers l'interface susdite comprise entre les couches contiguës précitées ; et
(5) l'application a ces couches superposées, d'une irradiation pour simultanément photopolymériser les monomères susdits de chaque couche et former des chaînes polymères constituées par des copolymères de monomères photopolymérisables provenant des couches contiguës s'étendant à travers l'interface susdite comprise entre celles-ci ;
pour produire ainsi un ruban comportant des couches qui ne peuvent pas être déstratifiées.

16. Procédé de préparation du ruban sensible à la pression de la revendication 8, ce procédé comprenant les phases suivantes :
(1) la préparation d'une composition applicable en couche, comportant des microbulles transparentes à l'ultraviolet, qui y sont dispersées, comportant au moins un monomère photopolymérisable à un état adhésif sensible à la pression ;

(2) la préparation d'une ou de plusieurs compositions applicables en couche, qui sont sans microbulle et comportent au moins un monomère photopolymérisable, ce monomère étant copolymérisable avec le monomère de la phase (1), lorsqu'ils sont mélangés et soumis à des conditions de photopolymérisation ;

(3) l'application séquentielle de ces compositions applicables en couche de la phase (1) et de la phase (2) sur un support à faible adhérence pour former des couches superposées, ces couches contiguës formant une interface entre elles ;

(4) la migration possible des monomères photopolymérisables à travers l'interface susdite comprise entre les couches contiguës précitées ; et

(5) l'application à ces couches superposées, d'une irradiation pour simultanément photopolymériser les monomères de chaque couche et former des chaînes polymères de copolymères de monomères polymérisables provenant des couches contiguës s'étendant à travers l'interface comprise entre ces couches ;

pour produire de la sorte un ruban comportant des couches qui ne peuvent pas être déstratifiées.

## Patentansprüche

1. Haftklebeband mit einer Mehrzahl von übereinanderliegenden, gleichzeitig photopolymerisierten Schichten, von denen mindestens eine außen angeordnete Schicht eine Acrylhaftkleberschicht ist, die mindestens teilweise aus mindestens einem Alkylacrylatestermonomer besteht, wobei aneinanderliegende Schichten eine Trennungsfläche bilden und jede der genannten Schichten eine photopolymerisierte Matrix aus Acrylpolymerketten sowie einen Photoinitiator enthält, die genannten Polymerketten sich von der Matrix einer der Schichten durch die Trennungsfläche in die Matrix einer daran anliegenden Schicht erstrecken und die genannten Polymerketten wenigstens teilweise aus photopolymerisierten Monomeren bestehen, die vor der Polymerisation aus der Matrix jeder der aneinanderliegenden Schichten gewandert sind, so daß die genannten Schichten nicht aufgespalten werden können.

2. Haftklebeband nach Anspruch 1, dadurch gekennzeichnet, daß die Haftkleberschicht wenigstens teilweise aus einem Acrylsäureester eines nichttertiären Alkylalkohols besteht, dessen Moleküle 1 bis 14 Kohlenstoffatome enthalten.

3. Haftklebeband nach Anspruch 2, dadurch gekennzeichnet, daß die Haftkleberschicht ferner mindestens ein copolymerisierbares polares Monomer enthält.

4. Haftklebeband nach Anspruch 3, dadurch gekennzeichnet, daß des Klebercopolymer
   (a) 40% bis 80% Isooctylacrylat und
   (b) 20% bis 60% eines copolymerisierbaren polaren Monomers enthält, das aus der Gruppe ausgewählt ist, die aus N-Vinylpyrrolidon und Acrylsäure besteht.

5. Haftklebeband nach Anspruch 1, dadurch gekennzeichnet, daß zu den übereinanderliegenden Schichten eine aussen angeordnete Haftkleberschicht und mindestens eine Schicht aus einem im wesentlichen nicht klebfähigen polymeren Material gehören.

6. Haftklebeband nach Anspruch 5, dadurch gekennzeichnet, daß das im wesentlichen nicht klebfähige polymere Material wenigstens teilweise aus photopolymerisiertem polymerem Material besteht, das aus der Gruppe ausgewählt ist, die aus den Polymeren der multifunktionellen Acrylate und den Copolymeren von Monomeren besteht, die wenigstens teilweise aus Acrylsäureestern von nichttertiären Alkoholen mit 1 bis 14 Kohlenstoffatomen und aus einem copolymerisierbaren polaren Monomer bestehen.

7. Haftklebeband nach Anspruch 6, dadurch gekennzeichnet, daß das im wesentlichen nicht klebfähige polymere Material wenigstens teilweise aus mindestens einem Copolymer aus Monomeren besteht, die
   (a) 40% bis 80% Acrylsäureester eines nichttertiären Alkohols, dessen Moleküle 1 bis 14 Kohlenstoffatome besitzen, und
   (b) 20% bis 60% mindestens eines copolymerisierbaren polaren Monomers enthalten.

8. Haftklebeband nach Anspruch 1, dadurch gekennzeichnet, daß mindestens eine der genannten Schichten ferner zu 5 bis 65 Vol.-% aus Mikroperlen mit einem spezifischen Gewicht über 1,0 besteht.

**9.** Haftklebeband nach Anspruch 1, dadurch gekennzeichnet, daß jede außen angeordnete Schicht eine Haftkleberschicht ist.

**10.** Haftklebeband nach Anspruch 9 mit außen angeordneten Schichten, die wenigstens teilweise aus einem photopolymerisierten polymeren Haftkleber bestehen, und mit mindestens einer Zwischenschicht aus photopolymerisiertem, nicht klebfähigem, polymerem Material, dadurch gekennzeichnet, daß jede der genannten Schichten wenigstens teilweise aus einem Copolymer aus Monomeren besteht, die

(a) in einem größeren Anteil aus einem Acrylsäureester eines nichttertiären Alkylalkohols bestehen, dessen Moleküle 1 bis 14 Kohlenstoffatome enthalten, und

(b) in einem kleineren Anteil aus einem copolymerisierbaren polaren Monomer, das aus der Gruppe ausgewählt ist, die aus N-Vinylpyrrolidon und Acrylsäure besteht.

**11.** Haftklebeband nach Anspruch 9, dadurch gekennzeichnet, daß jede der außen angeordneten Haftkleberschichten wenigstens teilweise aus einem Copolymer besteht, das mindestens ein photopolymerisierbares Monomer enthält, das in der anderen außen angeordneten Haftkleberschicht nicht vorhanden ist.

**12.** Haftklebeband nach Anspruch 10, dadurch gekennzeichnet, daß das in einer der Haftkleberschichten enthaltene copolymerisierbare polare Monomer (b) Acrylsäure und das in der anderen Haftkleberschicht enthaltene copolymerisierbare polare Monomer (b) N-Vinylpyrrolidon ist.

**13.** Haftklebeband nach Anspruch 10, dadurch gekennzeichnet, daß die zu einem nicht klebfähigen polymeren Material photopolymerisierte Schicht ferner zu 5 bis 65 Vol.-% aus Mikroperlen mit einem spezifischen Gewicht von oder unter 1,0 besteht.

**14.** Verfahren zum Herstellen des Haftklebebandes nach Anspruch 1 mit folgenden Schritten:

1) es wird eine Mehrzahl von streichfähigen Zusammensetzungen hergestellt, von denen jede mindestens ein photopolymerisierbares Monomer enthält und von denen mindestens eine in einen Haftkleberzustand härtbar ist, wobei Monomere jeder der streichfähigen Zusammensetzungen im vermengten Zustand unter Photopolymerisationsbedingungen copolymerisierbar sind;

2) die streichfähigen Zusammensetzungen werden nacheinander so aufgetragen, daß eine Mehrzahl von übereinanderliegenden Schichten gebildet wird und zwischen aneinanderliegenden Schichten eine Trennungsfläche vorhanden ist, wobei eine mindestens eine der genannten, in einen Haftkleberzustand härtbaren Zusammensetzungen als erste oder letzte Schicht aufgetragen wird;

3) es wird eine Wanderung von photopolymerisierbaren Monomeren durch die Trennungsfläche zwischen aneinanderliegenden Schichten zugelassen; und

4) die übereinanderliegenden Schichten werden einer Bestrahlung unterworfen, um gleichzeitig die Monomere in jeder Schicht zu photopolymerisieren und die zwischen den Schichten vorhandene Trennungsfläche durchsetzende Polymerkette zu bilden, die wenigstens teilweise aus Copolymeren aus photopolymerisierbarenbMonomeren bestehen, die aus einander benachbarten Schichten stemmen.

**15.** Verfahren zum Herstellen des Bandes nach Anpruch 4 mit folgenden Schtitten:

1) es wird mindestens eine streichfähige Zusammensetzung hergestellt, die zu einem nicht klebfähigen polymeren Material photopolymerisierbar ist;

2) es wird eine streichfähige Zusammensetzung hergestellt, die mindestens ein in einen Haftkleberzustand photopolymerisierbares Monomer enthält, das mit dem Monomer nach Schritt 1 copolymerisierbar ist, wenn es mit ihm vermengt ist und Photopolymerisationsbedingungen ausgesetzt wird;

3) die im Schritt 1 und im Schritt 2 hergestellten streichfähigen Zusammensetzungen werden zur Bildung von übereinanderliegenden Schichten derart auf eine Trägerbahn aufgetragen, daß zwischen aneinanderliegenden Schichten eine Trennungsfläche vorhanden ist;

4) es wird eine Wanderung von photopolymerisierbaren Monomeren durch die Trennungsfläche zwischen den aneinanderliegenden Schichten zugelassen; und

5) die übereinanderliegenden Schichten werden einer Bestrahlung unterworfen, um gleichzeitig die Monomere in jeder Schicht zu photopolymerisieren und die zwichen den vorhandene Schichten vorhandene Trennungsfläche durchsetzende Polymerketten zu bilden, die wenigstens teilweise aus Copolymeren aus photopolymerisierbaren Monomeren bestehen, die aus einander benachbarten Schichten stammen,

so daß ein Band mit nicht aufspaltbaren Schichten erhalten wird.

16. Verfahren zum Herstellen des Haftklebebandes nach Anspruch 8 mit folgenden Schritten:

1) es wird eine streichfähige Zusammensetzung hergestellt, in der ultraviolettdurchlässige Mikroperlen dispergiert sind und die wenigstens teilweise aus mindestens einem Monomer besteht, das in einen Haftkleberzustand photopolymerisierbar ist;

2) es wird mindestens eine mikroperlenfreie streichfähige Zusammensetzung hergestellt, die wenigstens teilweise aus mindestens einem photopolymerisierbaren Monomer besteht, das mit dem Monomer unter Photopolymerisationsbedingungen im Gemisch mit dem Monomer nach Schritt 1 mit diesem copolymerisierbar ist;

3) die streichfähigen Zusammensetzungen nach dem Schritt 1 und dem Schritt 2 werden nacheinander derart auf einen nur schwach klebfähigen Träger aufgetragen, daß übereinanderliegende Schichten gebildet werden und zwischen aneinanderliegenden Schichten eine Trennungsfläche vorhanden ist;

4) es wird eine Wanderung von photopolymerisierbaren Monomeren durch die Trennungsfläche zwischen den aneinanderliegenden Schichten zugelassen; und

5) die übereinanderliegenden Schichten werden einer Bestrahlung unterworfen, um gleichzeitig die Monomere in jeder Schicht zu photopolymerisieren und die zwischen den Schichten vorhandene Trennungsfläche durchsetzende Polymerketten zu bilden, die wenigstens teilweise aus Copolymeren aus photopolymerisierbaren Monomeren bestehen, die aus einander benachbarten Schichten stammen,

so daß ein Band mit nicht aufspaltbaren Schichten erhalten wird.